# EUROPEAN PATENT APPLICATION

(11) **EP 2 091 177 A1**
(43) Date of publication of application: **19.08.2009**
(21) Application number: 06834335.9
(22) Date of filing: 08.12.2006
(51) Int. Cl.: H04L 9/20

(54) **MOBILE COMMUNICATION SYSTEM, MOBILE UNIT AND WIRELESS CONTROL APPARATUS**

(71) Applicant: Fujitsu Limited, Kawasaki-shi, Kanagawa 211-8588 (JP)
(72) Inventor: TAKAHASHI, Noriyoshi, Kawasaki-shi Kanagawa 211-8588 (JP)
(74) Representative: Stebbing, Timothy Charles
(86) International application number: PCT/JP2006/324580
(87) International publication number: WO 2008/072292

(57) **Abstract**

In the cipher processing to be executed between the mobile unit and the radio control unit in the mobile communication system, an identical fixed data is stored beforehand in both the mobile unit and the radio control unit. The transmission side ciphers and transmits the fixed data at the timing prior to the user data transmission. Further, by deciphering the fixed data, and by comparing the deciphered fixed data with the fixed data having been stored beforehand, the reception side discriminates abnormality in the deciphered result. On the reception side, prior to the user data reception, the fixed data is received and deciphered, and in case that the above data does not match the fixed data having been stored beforehand, the deciphering is decided to be in failure, and the connection with the transmission side is released.

## Description

### TECHNICAL FIELD

The present invention relates to data cipher processing performed between a mobile unit and a radio control unit, and also, the mobile unit and the radio control unit executing the above cipher processing and a mobile communication system having the above units.

In W-CDMA (Wideband-Code Division Multiple Access), the cipher processing to be executed between a mobile unit (UE: User Equipment) in RAN (Radio Access Network) and particularly a radio control unit (RNC: Radio Network Controller) in UTRAN (UMTS Terrestrial Radio Access Network) is specified by 3GPP (3rd Generation Partnership Project).

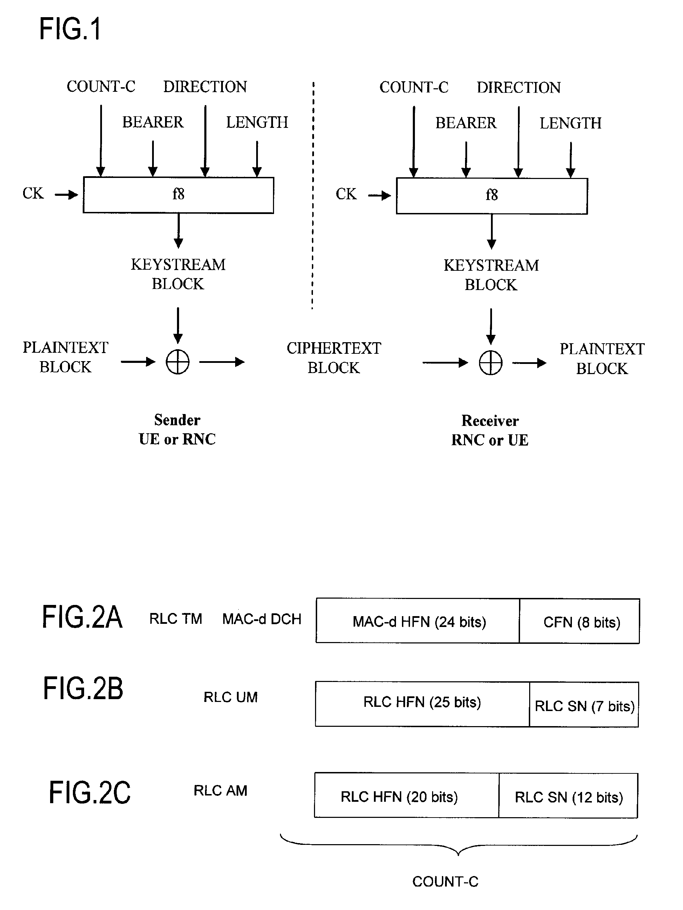

FIG. 1 is a diagram explaining the cipher processing between the mobile unit (UE) and the radio control unit (RNC). The cipher processing is specified in the patent documents 1, 2 shown below. The cipher processing is specified in both the RLC (Radio Link Control) sublayer and the MAC (Medium Access Control) sublayer in the data link layer (Layer 2). When either an acknowledged data transfer mode (AM: Acknowledge Mode) or an unacknowledged data transfer mode (UM: Unacknowledge Mode) is used in RLC, the cipher processing is performed in RLC, while when a transparent data transfer mode (TM: Transparent Mode) is used in RLC, the cipher processing is performed in MAC. Hereafter in the present invention, a case that the transparent data transfer mode is used in RLC and that the cipher processing is performed in MAC is mentioned. Data to be ciphered in MAC is MAC-SDU.

On the transmission side, by EX-ORing a data (PLAIN TEXT BLOCK) with a cipher key (KEY STREAM BLOCK) generated by an f8 algorithm, the data is ciphered, so that a ciphered data (CIPHER TEXT BLOCK) is generated. The f8 algorithm generates the cipher key (KEY STREAM BLOCK) using cipher parameters (COUNT-C, BRARER, DIRECTION and LENGTH) (as for the details of the f8 algorithm, refer to the non-patent document 3 shown below). Additionally, as will be described later, COUNT-C, one of the cipher parameters, is constituted by the combination of HFN (HYPER FRAME NUMBER) and CFN (CONNECTION FRAME NUMBER).

On the reception side, when the ciphered data (CIPHER TEXT BLOCK) is received, deciphering is performed by EX-ORing the cipher key (KEY STREAM BLOCK) generated by the f8 algorithm using the cipher parameters with the ciphered data (CIPHER TEXT BLOCK) in a similar manner to the transmission side, so that the original data (PLAIN TEXT BLOCK) is restored.

FIG. 2 is a diagram explaining COUNT-C, the cipher parameter. As described earlier, the cipher processing is performed when RLC is in the transparent data transfer mode (TM). COUNT-C in this case is constituted of HFN and CFN, as shown in FIG. 2(a). Additionally, FIGS. 2(b), 2(c) show COUNT-C structures when RLC is in AM and UM, respectively.

CFN and HFN have values counted up by the clocks in the mobile unit (UE) and the radio control unit (RNC), respectively. CFN is counted up clock-by-clock. When CFN is formed of 8 bits, the HFN count value is incremented by one every 256 clocks. Each CFN counted in the mobile unit and the radio control unit is mutually transmitted and received at appropriate times, so that synchronization is achieved. Accordingly, discrepancy between each CFN in the mobile unit and the radio control unit does not occur.

However, in regard to HFN, the initial value thereof is reported from either one of the mobile unit and the radio control unit to the other at the start of cipher execution in connection setup processing by RRC (Radio Resource Control) (refer to the non-patent document 4 shown below). At this time, there may a case that each HFN counted in the mobile unit and the radio control unit has a discrepancy due to the delay of an HFN notification sequence.

If the HFN values in the mobile unit and the radio control unit become different, COUNT-C for use in ciphering on the transmission side differs from COUNT-C for use in deciphering on the reception side. This results in unsuccessful deciphering of the data.

Additionally, in the patent document 1 shown below, there is disclosed a method for detecting abnormality in deciphering caused by the discrepancy of the HFN values, by ciphering a data having CRC added thereto on the transmission side, and by checking CRC when deciphering on the reception side.
[Patent document 1] the official gazette of the Japanese Unexamined Patent Publication No. 2006-54718.
[Non-patent document 1] 3GPP TS33.102 V5.6.0 (2005-09: 3rd Generation Partnership Project; Technical Specification Group Services and System Aspects; 3G Security; Security architecture (Release5) P35-38.
[Non-patent document 2] 3GPP TS 25.321 V5.12.0 (2005-09) : 3rd Generation Partnership Project; Technical Specification Group Radio Access Network; MAC protocol specification". (Release5) P47.
[Non-patent document 3] 3GPP TS 35.201 V6.1.0 (2005-09) : 3rd Generation Partnership Project; Technical Specification Group Services and System Aspects; Specification of the 3GPP confidentiality and integrity algorithms; Document 1: f8 and f9 specifications (Release6) P11, 12, ANNEX1, 2.
[Non-patent document 4] 3GPP TS 25.331 V5.17.0 (2006-06) : 3rd Generation Partnership Project; Technical Specification Group Radio Access Network; Radio Resource Control (RRC) protocol specification (Release5) P67(8.1.3), P111(8.2), P145(8.3).

### DISCLOSURE OF THE INVENTION

### PROBLEMS TO BE SOLVED BY THE INVENTION

As described above, if each HFN in the mobile unit and the radio control unit has discrepancy in the initial setting, the data cannot be deciphered normally on the reception side, and a correct original data cannot be obtained accordingly. Also, because the discrepancy of HFN cannot be detected and the abnormality in the deciphering result cannot be discriminated on the reception side, an abnormal data is reproduced intact, which causes a degraded communication service.

Accordingly, it is an object of the present invention to provide a mobile communication system, a mobile unit and a radio control unit detecting the abnormality in deciphering.

A first configuration of a mobile communication system of the invention to attain the above object is a mobile communication system having a mobile unit and a unit on the mobile communication system side, performing data transmission and reception via a radio network, wherein one of the mobile unit and the unit on the mobile communication system side includes: a first memory storing a fixed pattern data; a first cipher processing section ciphering data to be transmitted; and a transmission section transmitting the ciphered data to the other of the mobile unit and the unit on the mobile communication system side, wherein, before ciphering a user data, the first cipher processing section ciphers the fixed pattern data at timing capable of transmitting the user data to the other unit, and the transmission section transmits the ciphered fixed pattern data before transmitting a ciphered user data, and wherein the other unit includes: a reception section receiving from the one unit the data ciphered by the one unit; a second memory storing a fixed pattern data; and a second cipher processing section deciphering the ciphered data, wherein the second cipher processing section deciphers a data received for the first time at timing capable of receiving the ciphered data from the one unit, compares the deciphered data with the fixed pattern data, and decides the deciphering to be normal in the case of a match, while decides the deciphering to be abnormal in the case of a mismatch.

A second configuration of a mobile communication system of the invention is the mobile communication system of the first configuration, wherein the other unit includes a control section releasing connection with the one unit when the deciphering is decided to be abnormal.

A third configuration of a mobile communication system of the invention is the mobile communication system of the first configuration, wherein, using a cipher parameter including predetermined timing information being counted periodically, the first cipher processing section in the one unit ciphers the fixed pattern data at the predetermined timing, and the transmission section notifies the other unit of the predetermined timing information before ciphering the fixed pattern data, and, using a cipher parameter including the predetermined timing information, the second cipher processing section on the other unit deciphers data incoming after the reception of the predetermined timing information and received at the predetermined timing.

A fourth configuration of a mobile communication system of the invention is the mobile communication system of the third configuration, wherein the predetermined timing information includes initial value information of a value to be incremented each time the predetermined timing is counted for a predetermined number.

A first configuration of a mobile unit of the invention to attain the above object is a mobile unit transmitting data to a radio control unit via a radio network, including: a memory storing a fixed pattern data; a cipher processing section ciphering data to be transmitted; and a transmission section transmitting the ciphered data to the radio control unit, wherein, before ciphering a user data, the first cipher processing section ciphers the fixed pattern data at timing capable of transmitting the user data to the radio control unit, and the transmission section transmits the ciphered fixed pattern data before transmitting a ciphered user data.

A second configuration of a mobile unit of the invention is the mobile unit of the first configuration, wherein, using a cipher parameter including predetermined timing information being counted periodically, the cipher processing section ciphers the fixed pattern data at the predetermined timing, and the transmission section notifies the radio control unit of the predetermined timing information before ciphering the fixed pattern data.

A third configuration of a mobile unit of the invention is the mobile unit of the second configuration, wherein, the predetermined timing information includes initial value information of a value to be incremented each time the predetermined timing is counted for a predetermined number.

A fourth configuration of a mobile unit of the invention is the mobile unit receiving data from a radio control unit via a radio network, including: from the radio control unit, a reception section receiving the data ciphered by the radio control unit; a memory storing a fixed pattern data; and a cipher processing section deciphering the ciphered data, wherein the cipher processing section deciphers a data received for the first time at timing capable of receiving the ciphered data from the radio control unit, compares the deciphered data with the fixed pattern data, and decides the deciphering to be normal in the case of a match, while decides the deciphering to be abnormal in the case of a mismatch.

A fifth configuration of a mobile unit of the invention is the mobile unit of the fourth configuration, which further includes, a control section releasing connection with the mobile unit when the deciphering is decided to be abnormal.

A sixth configuration of a mobile unit of the invention is the mobile unit of the fourth configuration, wherein, from the radio control unit, the reception section receives predetermined timing information being counted periodically, and the cipher processing section deciphers data incoming after the reception of the predetermined timing information and received at the predetermined timing, using the cipher parameter including the predetermined timing information.

A seventh configuration of a mobile unit of the invention is the mobile unit of the sixth configuration, wherein, the predetermined timing information includes initial value information of a value to be incremented each time the predetermined timing is counted for a predetermined number.

A first configuration of a radio control unit of the invention to attain the object is a radio control unit transmitting via a radio network, including: a memory storing a fixed pattern data; a cipher processing section ciphering data to be transmitted; and a transmission section transmitting the ciphered data to the radio control unit, wherein, before ciphering a user data, the cipher processing section ciphers the fixed pattern data at timing capable of transmitting the user data to the mobile unit, and the transmission section transmits the ciphered fixed pattern data before transmitting a ciphered user data.

A second configuration of a radio control unit of the invention is the radio control unit of the first configuration, wherein, using a cipher parameter including predetermined timing information being counted periodically, the cipher processing section ciphers the fixed pattern data at the predetermined timing, and the transmission section notifies the mobile unit of the predetermined timing information before ciphering the fixed pattern data.

A third configuration of a radio control unit of the invention is the radio control unit of the second configuration, wherein, the predetermined timing information includes initial value information of a value to be incremented each time the predetermined timing is counted for a predetermined number.

A fourth configuration of a radio control unit of the invention is the radio control unit receiving data from a mobile unit via a radio network, including: from the mobile unit, a reception section receiving the data ciphered by the mobile unit; a memory storing a fixed pattern data; and a cipher processing section deciphering the ciphered data, wherein the cipher processing section deciphers a data received for the first time at timing capable of receiving the ciphered data from the mobile unit, compares the deciphered data with the fixed pattern data, and decides the deciphering to be normal in the case of a match, while decides the deciphering to be abnormal in the case of a mismatch.

A fifth configuration of a radio control unit of the invention is the radio control unit of the fourth configuration, further includes: a control section releasing connection with the mobile unit when the deciphering is decided to be abnormal.

A Sixth configuration of a radio control unit of invention is the radio control unit of the fourth configuration, wherein, from the mobile unit, the reception section receives predetermined timing information being counted periodically, and the cipher processing section deciphers data incoming after the reception of the predetermined timing information and received at the predetermined timing, using the cipher parameter including the predetermined timing information.

A seventh configuration of a radio control unit of the invention is the radio control unit of the sixth configuration, wherein, the predetermined timing information includes initial value information of a value to be incremented each time the predetermined timing is counted for a predetermined number.

### EFFECTS OF THE INVENTION

According to the present invention, abnormality in deciphering due to an HFN discrepancy can be detected. Also, because the abnormality in deciphering is decided using a fixed pattern prior to the deciphering of user data, when the abnormality of deciphering is detected, the connection between the mobile unit and the radio control unit can be released promptly before the start of an abnormal data communication such as an abnormal voice output on the reception side.

Because the abnormality in deciphering can be detected by transmitting/receiving a fixed pattern data only once at a stage before the start of user data transmission, the abnormally in deciphering can be detected without imposing a heavy load upon the cipher processing.

### BRIEF DESCRIPTION OF THE DRAWINGS

[FIG. 1] FIG. 1 is a diagram explaining the cipher processing between the mobile unit (UE) and the radio control unit (RNC).
[FIG. 2] FIG. 2 is a diagram explaining COUNT-C, the cipher parameter.
[FIG. 3] FIG. 3 is a diagram illustrating an exemplary configuration of the mobile communication system according to the embodiment of the present invention.
[FIG. 4] FIG. 4 shows diagrams illustrating exemplary configurations of radio control unit 13 and mobile unit 11.
[FIG. 5] FIG. 5 is a diagram illustrating the cipher processing sequence of a user data in call connection processing.
[FIG. 6] FIG. 6 is a diagram illustrating the timing chart of cipher processing. FIG. 6 shows exemplary states of HFN and CFN in the cipher processing.
[FIG. 7] FIG. 7 is a flowchart of abnormality detection processing in the cipher processing according to the embodiment of the present invention.

### BEST MODE FOR CARRYING OUT THE INVENTION

Embodiments of the present invention will now be described. It is to be noted however that the technical scope of the present invention is not limited to the embodiments.

According to the present invention, in the cipher processing to be executed between the mobile unit and the radio control unit in the mobile communication system, an identical fixed data is stored beforehand in both the mobile unit and the radio control unit. Further, the transmission side ciphers and transmits the fixed data at the timing no user data is transmitted (preferably, at the timing prior to the user data transmission). Further, by deciphering the fixed data, and by comparing the deciphered fixed data with the fixed data having been stored beforehand, the reception side discriminates abnormality in the deciphered result.

On the reception side, prior to the user data reception, the fixed data is received and deciphered, and in case that the above data does not match the fixed data having been stored beforehand, the deciphering is decided to be in failure, and the connection with the transmission side is released.

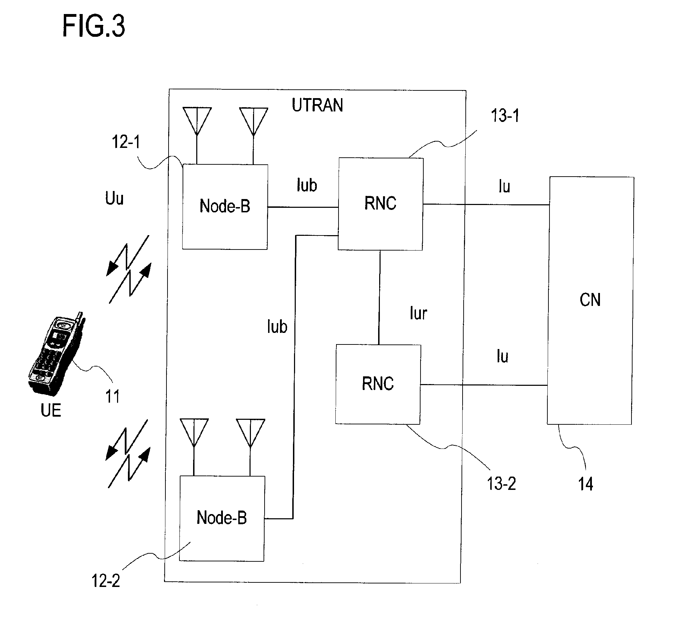

FIG. 3 is a diagram illustrating an exemplary configuration of the mobile communication system according to the embodiment of the present invention. RAN (Radio Access Network) of the mobile communication system in W-CDMA is configured of a node B (base station) 12 and a radio control unit (RNC) 13. In 3GPP, RAN is called UTRAN (UMTS Terrestrial Radio Access Network). UTRAN can provide a plurality of nodes B 12 and radio control units 13.

Node B 12 processes the reception of uplink transmission data from a mobile unit (UE) 11, so as to transmit to radio control unit 13, and also processes the reception of downlink transmission data from radio control unit 13, so as to transmit to mobile unit 11. Radio control unit 13 transmits the uplink transmission data from the node B to a core network 14, and also transmits downlink transmission data from core network 14 to the node B.

An Iu interface is an interface between radio control unit 13 and core network 14. An Iub interface is an interface between radio control unit 13 and node B 12. An Iur interface is an interface between the radio control units. A Uu interface is a radio interface between mobile unit 11 and node B 12.

When mobile unit 11 transmits an uplink data to radio control unit 13, mobile unit 11 ciphers the uplink data, and radio control unit 13 deciphers the uplink data concerned. When radio control unit 13 transmits a downlink data to mobile unit 11, radio control unit 13 ciphers the downlink data, and mobile unit 11 deciphers the downlink data concerned.

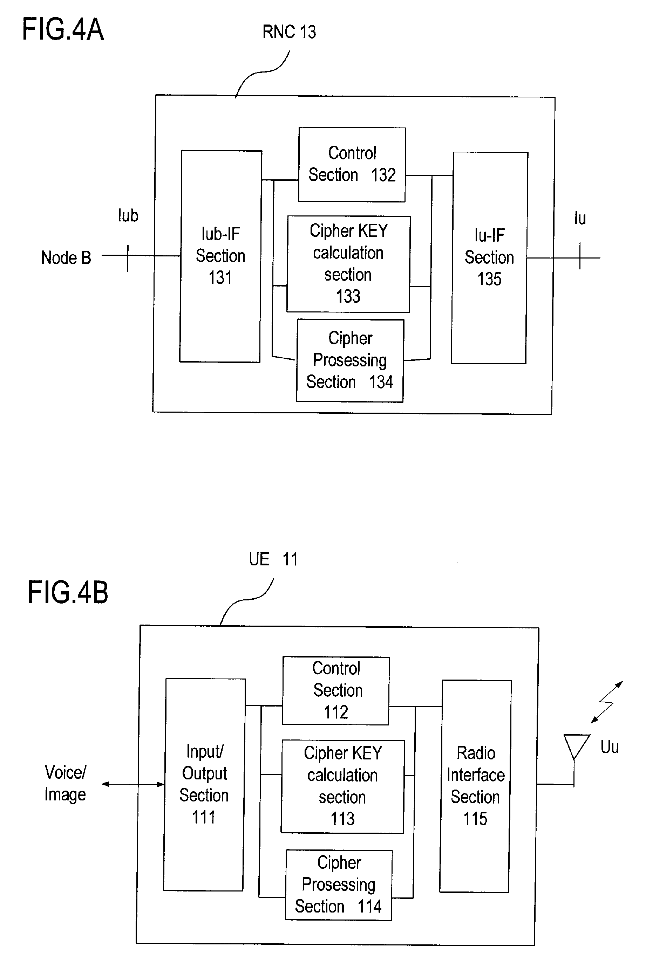

FIG. 4 shows diagrams illustrating exemplary configurations of radio control unit 13 and mobile unit 11. Radio control unit 13 shown in FIG. 4 (a) is configured of Iub interface section 131, control section 132, cipher key calculation section 133, cipher processing section 134 and Iu interface section 135. Iub interface section 131 executes communication processing between with node B 12. Control section 132 controls the overall radio control unit 13, including setting processing of cipher parameters informed through the layer 3 RRC (Radio Resource Control), and call control processing as well. Cipher calculation section 133 executes the processing of generating a KSB (KEY STREAM BLOCK) using the cipher parameters constituted of COUNT-C, CK, BEARER, DIRECTION and LENGTH, and obtaining COUNT-C by counting CFN and HFN constituting COUNT-C.

In the case of uplink data, cipher processing section 134 deciphers the uplink data using the generated KSB, while in the case of downlink data, cipher processing section 134 ciphers the downlink data using the generated KSB. Further, as characteristic processing of the present invention, when deciphering the uplink data, cipher processing section 134 deciphers a fixed data included in the uplink data, and compares the deciphered fixed data with a fixed data having been stored beforehand in cipher processing section 134, so as to decide existence or non-existence of abnormality in the deciphered result. Also, when ciphering the downlink data, cipher processing section 134 ciphers a fixed data, so as to add to the downlink data. Iu interface section 135 executes communication processing between with core network 14.

Mobile unit 11 shown in FIG. 4(b) is configured of input/output section 111, control section 112, cipher key calculation section 113, cipher processing section 114 and radio interface section 115. Input/output section 111 accepts inputs such as voice signals and image signals, so as to generate uplink data therefrom, and also, outputs by converting downlink data into voice signals and image signals for external output. Typically, input/output section 111 includes microphone, receiver, speaker, liquid crystal display, and operational key.

Control section 112 controls the overall mobile unit 11, including setting processing of cipher parameters informed through the layer 3 RRC (Radio Resource Control) and call control processing. Cipher calculation section 113 executes the processing of generating a KSB (KEY STREAM BLOCK) using the cipher parameters constituted of COUNT-C, CK, BEARER, DIRECTION and LENGTH, and obtaining COUNT-C by counting CFN and HFN constituting COUNT-C.

In the case of downlink data, cipher processing section 114 deciphers the downlink data using the generated KSB, while in the case of uplink data, cipher processing section 114 ciphers uplink data using the generated KSB. Further, as characteristic processing of the present invention, when deciphering the downlink data, cipher processing section 114 deciphers a fixed data included in the downlink data, and compares the deciphered fixed data with a fixed data having been stored beforehand in cipher processing section 114, so as to decide existence or non-existence of abnormality in the deciphered result. Also, when ciphering the uplink data, cipher processing section 114 ciphers a fixed data, so as to add to the uplink data. Radio interface section 115 executes communication processing between with node B 102.

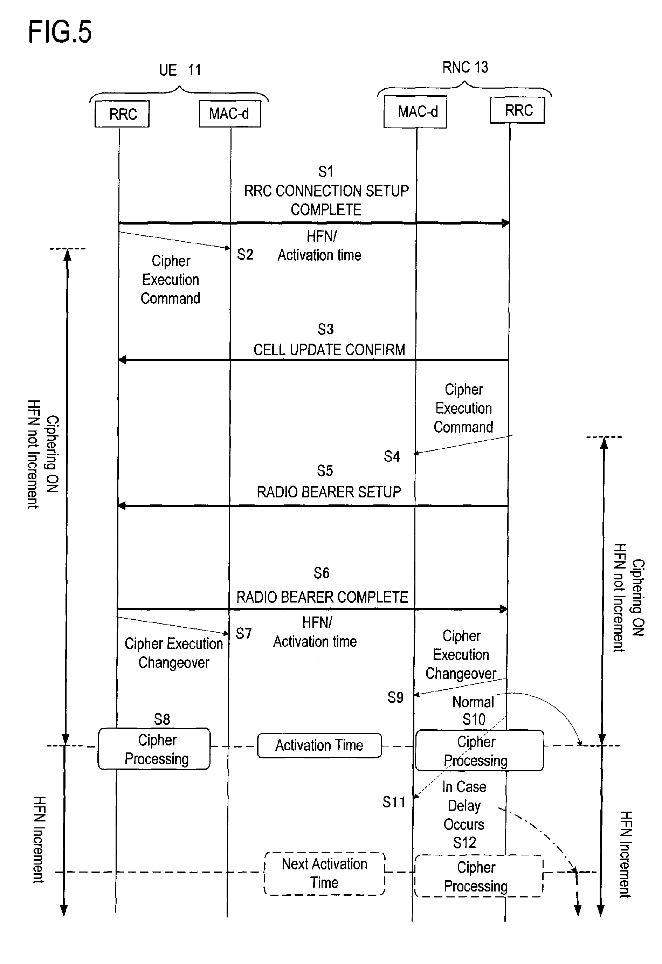

FIG. 5 is a diagram illustrating the cipher processing sequence of a user data in call connection processing. The setting, the modification and the release of connection between mobile unit (UE) 11 and radio control unit (RNC) 13 and signal transfer therebetween are provided by RRC (Radio Resource Control). Further, when RLC is in the transparent data transfer mode (TM), cipher processing is performed via MAC-d. FIG. 5 is an exemplary case that a connection setup request is initiated from the mobile unit (UE) 11 side, that is, an uplink data is to be transmitted to radio control unit (RNC) 13. In the above case, when the cipher processing is started, mobile unit 11 on the transmission side ciphers the data to be transmitted, while radio control unit 13 on the reception side deciphers a received data.

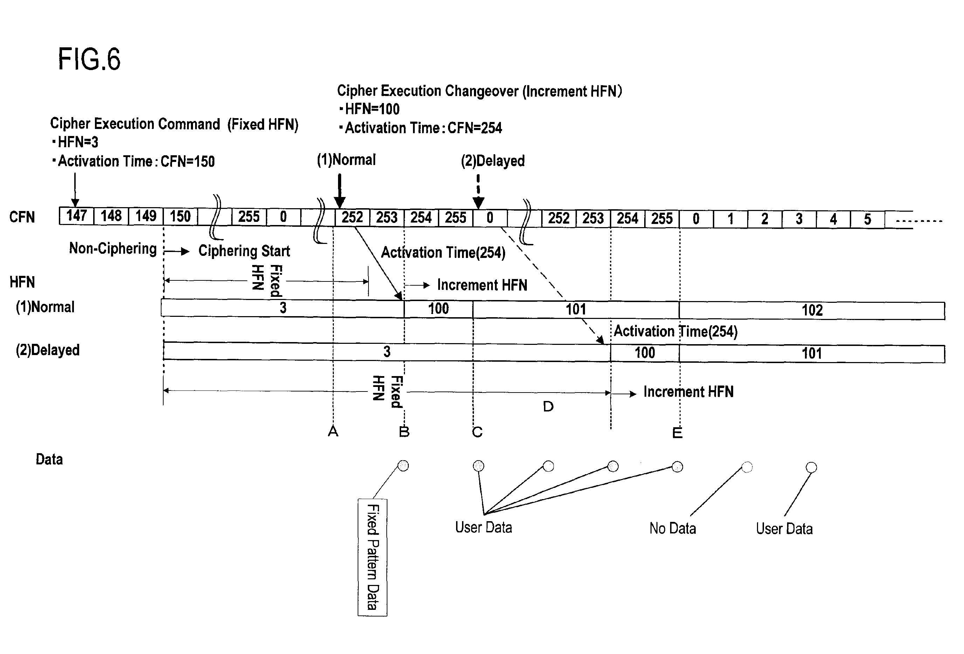

FIG. 6 is a diagram illustrating the timing chart of cipher processing. FIG. 6 shows exemplary states of HFN and CFN in the cipher processing. With reference to FIG. 6, explanation is given along FIG. 5.

Here, FIG. 5 shows a sequence to cipher a user data, and a brief description will be given in regard to a call connection request and thereafter.

In FIG. 5, mobile unit (UE) 11 transmits an RRC CONNECTION SETUP COMPLETE message to radio control unit (RNC) 13, indicating the completion of a call setup state for voice communication (step S1). At this time, a cipher execution command is issued from RRC to MAC-d (step S2), and mobile unit 11 starts cipher processing accordingly. The RRC CONNECTION SETUP COMPLETE message includes the values of HFN and CFN (which is called Activation Time) constituting COUNT-C, one of the cipher parameters. After receiving the RRC CONNECTION SETUP COMPLETE message, radio control unit (RNC) 13 returns a CELL UPDATE CONFIRM message to mobile unit (UE) 11 (step S3), and also a cipher execution command is issued from RRC to MAC-d (step S4). Thus, radio control unit 13 starts cipher processing.

By the cipher execution command, as shown in FIG. 6, the values of HFN and the Activation Time (CFN) are given, so that both mobile unit 11 and radio control unit 13 start the cipher processing from the given Activation Time. Namely, mobile unit (UE) 11 on the transmission side ciphers data to be transmitted, while radio control unit (RNC) 13 on the reception side deciphers received data. At this time, the HFN value is fixed, and even if the Activation Time is counted up to 256, the HFN value is not incremented. Because there is a time difference between the transmission side and the reception side, corresponding to a transmission time to notify of HFN and the Activation Time, mobile unit 11 sets an Activation Time, taking the above time difference into consideration. When it becomes the Activation Time after the cipher execution command is issued, the cipher processing is started.

In FIG. 6, by the cipher execution command, HFN=3 and the Activation Time=150 is given, for example.Irrespective of the Activation Time being counted up, HFN=3 is kept fixed.

Referring back to FIG. 5, using a RADIO BEARER SETUP message, radio control unit 13 informs mobile unit 11 that the cipher processing has been started with the received Activation Time (step S5). In the cipher processing stage triggered by the above cipher execution command, because no connection has been set up (for example, voice communication has not been started), actually, the ciphering and the deciphering of data are not performed.

Thereafter, mobile unit 11 transmits a RADIO BEARER COMPLETE message to radio control unit 13 (step S6). When radio control unit 13 receives the above RADIO BEARER COMPLETE message, a connection between mobile unit 11 and radio control unit 13 is established, so as to enable data transmission. Then, triggered by the RADIO BEARER COMPLETE message, a cipher execution changeover is performed. In the cipher execution changeover, a new HFN and an Activation Time are specified again. Similar to the above description, the Activation Time is set in consideration of the transmission time of the RADIO BEARER COMPLETE message from mobile unit 11 to radio control unit 13. Also, HFN specified by the cipher execution changeover is incremented according to the counting up of the Activation Time.

In FIG. 6, at the cipher execution changeover, it is assumed that, for example, HFN=100 and the Activation Time=254 are given. In radio control unit 13 on the reception side, when the RADIO BEARER COMPLETE message is received at the Activation Time=252 (timing A) in (1) normal case, and the cipher execution changeover command is given at the above timing, a changeover to HFN=100 is performed thereafter at timing B of the Activation Time=254. At timing C, producing CFN=0 according to the counting up of the Activation Time, HFN is incremented by one, resulting in 101. Thereafter also, at the timing of CFN=0 according to the counting up of the CFN, HFN is incremented one by one.

Additionally, in mobile unit 11 on the transmission side, cipher execution changeover is carried out before the message reception timing in radio control unit 13 on the reception side, and at the timing of the Activation Time=254 in (1) normal case, a changeover to HFN=100 is made. As such, in the above (1) normal case, the HFN values respectively incremented in mobile unit 11 and radio control unit 13 mutually match.

At this time, assuming that the notification of the Activation Time from the transmission side to the reception side is delayed (in other words, the reception of the RADIO BEARER COMPLETE message is delayed) because of some reasons such as the occurrence of traffic congestion and a transmission path failure, and that the cipher execution changeover is carried out after passing the Activation Time=254, at which HFN is to be changed over in (1) normal case, a changeover to HFN=100 is carried out at timing D of the next Activation Time=254, with the delay of one period, as shown by (2) delay case in FIG. 6. Thereafter, at timing E having CFN=0, HFN is incremented by one, resulting in 101. At this time, in mobile unit 11 also, HFN is incremented from 101 to 102, as shown in (1) normal case.

When such the delay occurs, a discrepancy occurs between HFN being incremented in mobile unit 11 and HFN being incremented in radio control unit 13, and each HFN is kept incremented independently. Therefore, a state of having discrepancy continues, which cannot be restored to the normal state.

If HFN values have discrepancy, the cipher keys on the transmission side and on the reception side differ. As a result, data cannot be deciphered normally, and correct original data cannot be obtained.

Referring back to FIG. 5, by the cipher execution changeover in mobile unit 11 (step S7), the cipher processing is started from the specified Activation Time (step S8). Further, by the cipher execution changeover in radio control unit 13 (step S9), in the normal case, the cipher processing is started at the same Activation Time in radio control unit 13 also (step S10). However, if the cipher execution changeover is delayed (step S11), the cipher processing is started from the Activation Time in the next period (step S12), causing the discrepancy of HFN.

As shown in FIG. 6, the data are transmitted at intervals of 20 msec from the Activation Time specified by the cipher execution changeover. According to the present invention, before the start of user data transmission (voice data etc.), a predetermined fixed pattern data is transmitted. Mobile unit 11 and radio control unit 13 has the same fixed pattern data stored, and mobile unit 11 ciphers and transmits the above fixed pattern data before the data transmission. Radio control unit 13 deciphers the above ciphered fixed pattern data, and discriminates whether the cipher processing is abnormal by comparing the deciphered data with the stored fixed pattern data.

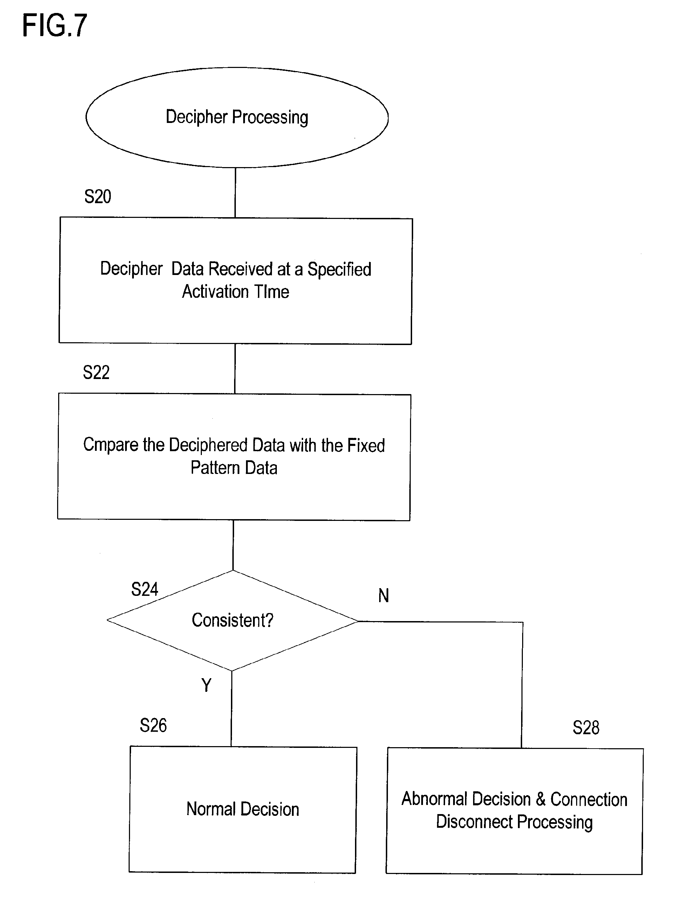

FIG. 7 is a flowchart of abnormality detection processing in the cipher processing according to the embodiment of the present invention. The above processing is executed by a cipher processing section 134 of radio control unit 13 on the reception side. A data being received for the first time after the start of the cipher processing (a data received at the specified Activation Time) is deciphered (step S20). The deciphered data is compared with the fixed pattern data having been stored beforehand (step S22). In step S24, in the case of a match, the cipher processing is decided to be normal (step S26), and the deciphering of user data subsequently received is continued. In the case of a mismatch in step S24, the cipher processing is decided to be abnormal, and the connection with mobile unit 11 is released accordingly (step S28). Specifically, cipher processing section 134 notifies control section 132 of the abnormality in the cipher processing, and control section 132 notifies mobile unit 11 that the abnormality in the deciphering has been detected through RRC, so as to execute call release processing and release the connection. The reason is that, because it is not possible to restore when the HFN values come to have discrepancy, it is necessity to release the connection once, and to perform call connection processing again.

At the stage prior to the start of user data transmission, it is possible to detect abnormality in deciphering only by transmitting/receiving the fixed pattern data once. Therefore, it is possible to detect the abnormality in deciphering without imposing a heavy load to the cipher processing.

The above-mentioned embodiment describes the cipher processing in regard to uplink data from mobile unit 11 to radio control unit 13, which is also applicable to the cipher processing in regard to downlink data from radio control unit 13 to mobile unit 11. In such the case, since mobile unit 11 on the reception side performs deciphering, mobile unit 11 deciphers a data received for the first time, compares with a fixed pattern data having been stored beforehand, and decides consistency, based on the processing shown in FIG. 7.

Also, in the above-mentioned embodiment, the abnormality in cipher processing is detected by the comparison with the fixed pattern data. However, it may also be possible to detect the abnormality in the deciphered result using the voice characteristic of the deciphered data. In case that the cipher keys on the transmission side and the reception side are not consistent, and when the data is deciphered on the reception side using a cipher key different from the cipher key of the transmission side, the voice differs from an ordinary human voice, and cannot be recognized at all. Also, the voice band of the deciphered data deviates from the voice band uttered by human beings.

Accordingly, by means of a voice recognition function mounted on a cipher processing section in which deciphering is performed, and by the execution of voice recognition using the above voice recognition function after deciphered data is converted into voice data, the deciphered result is decided to be abnormal, if a voice incapable of recognition is detected. The voice recognition function is a function capable of recognizing voices uttered by human beings as language, and it is possible to use a known voice recognition technique that has been put into practical use for voice input in a personal computer, for example.

Further, by the analysis of the frequency characteristic of the deciphered data, when a frequency deviating from the voice band uttered by human beings is detected, the deciphered result is decided abnormal. For example, a band pass filter passing the voice band uttered by human beings is mounted on the cipher processing section. After the deciphered data is converted into a voice data, it is detected whether or not a frequency component incapable of passing through the band pass filter exists.

### INDUSTRIAL APPLICABILITY

The present invention is applicable to the mobile unit and the radio control unit configuring the mobile communication system. When a user performs voice communication using the mobile unit, abnormality in the cipher processing performed for voice data communication is detected, and the communication is immediately released when the voice is not reproduced correctly. By this, it becomes possible to lessen inconvenience and discomfort feeling to the user.

## Claims

1. A mobile communication system having a mobile unit and a unit on the mobile communication system side, performing data transmission and reception via a radio network,
wherein one of the mobile unit and the unit on the mobile communication system side includes:
a first memory storing a fixed pattern data;
a first cipher processing section ciphering data to be transmitted; and
a transmission section transmitting the ciphered data to the other of the mobile unit and the unit on the mobile communication system side,
wherein, before ciphering a user data, the first cipher processing section ciphers the fixed pattern data at timing capable of transmitting the user data to the other unit, and the transmission section transmits the ciphered fixed pattern data before transmitting a ciphered user data, and
wherein the other unit includes:
a reception section receiving from the one unit the data ciphered by the one unit;
a second memory storing a fixed pattern data; and
a second cipher processing section deciphering the ciphered data,
wherein the second cipher processing section deciphers a data received for the first time at timing capable of receiving the ciphered data from the one unit, compares the deciphered data with the fixed pattern data, and decides the deciphering to be normal in the case of a match, while decides the deciphering to be abnormal in the case of a mismatch.

2. The mobile communication system according to claim 1,
wherein the other unit includes a control section releasing connection with the one unit when the deciphering is decided to be abnormal.

3. The mobile communication system according to claim 1,
wherein, using a cipher parameter including predetermined timing information being counted periodically, the first cipher processing section in the one unit ciphers the fixed pattern data at the predetermined timing, and the transmission section notifies the other unit of the predetermined timing information before ciphering the fixed pattern data, and
wherein, using a cipher parameter including the predetermined timing information, the second cipher processing section on the other unit deciphers data incoming after the reception of the predetermined timing information and received at the predetermined timing.

4. The mobile communication system according to claim 3,
wherein the predetermined timing information includes initial value information of a value to be incremented each time the predetermined timing is counted for a predetermined number.

5. The mobile communication system according to claim 1,
wherein the unit on the mobile communication system side is a radio control unit.

6. A mobile unit transmitting data to a radio control unit via a radio network, comprising:
a memory storing a fixed pattern data;
a cipher processing section ciphering data to be transmitted; and
a transmission section transmitting the ciphered data to the radio control unit,
wherein, before ciphering a user data, the first cipher processing section ciphers the fixed pattern data at timing capable of transmitting the user data to the radio control unit, and the transmission section transmits the ciphered fixed pattern data before transmitting a ciphered user data.

7. The mobile unit according to claim 6,
wherein, using a cipher parameter including predetermined timing information being counted periodically, the cipher processing section ciphers the fixed pattern data at the predetermined timing, and the transmission section notifies the radio control unit of the predetermined timing information before ciphering the fixed pattern data.

8. The mobile unit according to claim 7,
wherein the predetermined timing information includes initial value information of a value to be incremented each time the predetermined timing is counted for a predetermined number.

9. A mobile unit receiving data from a radio control unit via a radio network, comprising:
a reception section receiving from the radio control unit the data ciphered by the radio control unit;
a memory storing a fixed pattern data; and
a cipher processing section deciphering the ciphered data,
wherein the cipher processing section deciphers a data received for the first time at timing capable of receiving the ciphered data from the radio control unit, compares the deciphered data with the fixed pattern data, and decides the deciphering to be normal in the case of a match, while decides the deciphering to be abnormal in the case of a mismatch.

10. The mobile unit according to claim 9, further comprising:
a control section releasing connection with the mobile unit when the deciphering is decided to be abnormal.

11. The mobile unit according to claim 9,
wherein, from the radio control unit, the reception section receives predetermined timing information being counted periodically, and the cipher processing section deciphers data incoming after the reception of the predetermined timing information and received at the predetermined timing, using the cipher parameter including the predetermined timing information.

12. The mobile unit according to claim 11,
wherein the predetermined timing information includes initial value information of a value to be incremented each time the predetermined timing is counted for a predetermined number.

13. A radio control unit transmitting data to a mobile unit via a radio network, comprising:
a memory storing a fixed pattern data;
a cipher processing section ciphering data to be transmitted; and
a transmission section transmitting the ciphered data to the radio control unit,
wherein, before ciphering a user data, the cipher processing section ciphers the fixed pattern data at timing capable of transmitting the user data to the mobile unit, and the transmission section transmits the ciphered fixed pattern data before transmitting a ciphered user data.

14. The radio control unit according to claim 13,
wherein, using a cipher parameter including predetermined timing information being counted periodically, the cipher processing section ciphers the fixed pattern data at the predetermined timing, and the transmission section notifies the mobile unit of the predetermined timing information before ciphering the fixed pattern data.

15. The radio control unit according to claim 14,
wherein the predetermined timing information includes initial value information of a value to be incremented each time the predetermined timing is counted for a predetermined number.

16. A radio control unit receiving data from a mobile unit via a radio network, comprising:
a reception section receiving from the mobile unit the data ciphered by the mobile unit;
a memory storing a fixed pattern data; and
a cipher processing section deciphering the ciphered data,
wherein the cipher processing section deciphers a data received for the first time at timing capable of receiving the ciphered data from the mobile unit, compares the deciphered data with the fixed pattern data, and decides the deciphering to be normal in the case of a match, while decides the deciphering to be abnormal in the case of a mismatch.

17. The radio control unit according to claim 16, further comprising:
a control section releasing connection with the mobile unit when the deciphering is decided to be abnormal.

18. The radio control unit according to claim 16,
wherein, from the mobile unit, the reception section receives predetermined timing information being counted periodically, and the cipher processing section deciphers data incoming after the reception of the predetermined timing information and received at the predetermined timing, using the cipher parameter including the predetermined timing information.

19. The radio control unit according to claim 18,
wherein the predetermined timing information includes initial value information of a value to be incremented each time the predetermined timing is counted for a predetermined number.
